# EUROPEAN PATENT APPLICATION

(11) **EP 4 672 133 A1**
(43) Date of publication of application: **31.12.2025**
(21) Application number: 24759600.0
(22) Date of filing: 08.02.2024
(51) Int. Cl.: G06T 5/50, G06T 3/40, H04N 19/59

(54) **IMAGE PROCESSING METHOD AND APPARATUS, AND ELECTRONIC DEVICE**

(30) Priority: 20.02.2023 CN 202310181542
(71) Applicant: Douyin Vision Co., Ltd., Beijing 100041 (CN)
(72) Inventor: GAO, Yukang, Beijing 100028 (CN); JIAO, Shaohui, Beijing 100028 (CN)
(74) Representative: Isarpatent
(86) International application number: PCT/CN2024/077008
(87) International publication number: WO 2024/174923

(57) **Abstract**

An image processing method and apparatus, and an electronic device. The method comprises: acquiring a first image of a video and a first depth image corresponding to the first image; acquiring N second image frames before the first image, and a second depth image and an optical flow image corresponding to each second image frame, wherein N is an integer greater than 0; and, on the basis of the first image, the first depth image, the N previous second image frames, the N second depth images and the N optical flow images, determining a super-sampling image corresponding to the first image. The super-sampling accuracy can be improved.

## Description

The present application claims the priority and benefits of Chinese Patent Application No. 202310181542.2, filed on February 20, 2023, which is incorporated herein by reference in its entirety as part of the present application.

### TECHNICAL FIELD

Embodiments of the present disclosure relate to an image processing method, an apparatus and an electronic device.

### BACKGROUND

Super-sampled processing may convert low-resolution images in videos into high-resolution images, thereby high-resolution videos are obtained.

At present, a low-resolution image may be input to a pre-trained super-sampled model, and the low-resolution image may be super-sampled based on the super-sampled model, to obtain a super-sampled high-resolution image. However, in the above method, the super-sampled model may not acquire prior information of the low-resolution image, and the accuracy of the image super-sampling obtained by the super-sampled model is relatively low. How to improve the accuracy of image super-samplings is an urgent problem to be solved.

### SUMMARY

The present disclosure provides an image processing method, an apparatus and an electronic device, which are used to solve a technical problem of low accuracy in super-sampling.

In the first aspect, the present disclosure provides an image processing method, and the method includes:
acquiring a first image of a video and a first depth image corresponding to the first image;
acquiring N preceding frames of the first image as second images, and a second depth image corresponding to each second image and an optical flow image corresponding to each second image, wherein N is an integer greater than 0; and
determining a super-sampled image corresponding to the first image based on the first image, the first depth image, the second images, N second depth images, and N optical flow images.

In the second aspect, the present disclosure provides an image processing apparatus, and the image processing apparatus includes: a first acquiring module, a second acquiring module, and a determining module, wherein,
the first acquiring module is configured to acquire a first image of a video and a first depth image corresponding to the first image;
the second acquiring module is configured to acquire N preceding frames of the first image as second images, and a second depth image corresponding to each second image and an optical flow image corresponding to each second image, wherein N is an integer greater than 0; and
the determining module is configured to determine a super-sampled image corresponding to the first image based on the first image, the first depth image, the second images, N second depth images, and N optical flow images.

In the third aspect, embodiments of the present disclosure provide an electronic device including a processor and a memory;
the memory stores a computer execution instructions; and
the processor executes the computer execution instructions stored in the memory, so that the processor executes the image processing method as described above in the first aspect and as variously as may be covered in the first aspect.

In the fourth aspect, embodiments of the present disclosure provide a computer-readable storage medium, wherein the computer-readable storage medium stores a computer execution instruction, and when the processor executes the computer execution instruction, implements the image processing method as described above in the first aspect and as variously as may be covered in the first aspect.

In the fifth aspect, embodiments of the present disclosure provide a computer program product including a computer program, the computer program when executed by a processor implements the image processing method as described in the first aspect above and as variously as may be related to the first aspect.

The present disclosure provides an image processing method, an apparatus and an electronic device. The electronic device may acquire a first image of a video and a first depth image corresponding to the first image; acquire N preceding frames of the first image as second images, and a second depth image corresponding to each second image and an optical flow image corresponding to each second image, wherein N is an integer greater than 0; and determine a super-sampled image corresponding to the first image based on the first image, the first depth image, the second images, N second depth images, and N optical flow images. According to the above method, since the electronic device may directly perform super-sampled convolution on low-resolution images, and the number of pixels in the convolution process is smaller, the efficiency of the super-sampled may be improved. In addition, the electronic device may perform super-sampling on the first image based on image information of the first image and image information of the N preceding frames. Therefore, the electronic device may acquire more prior information of the image. In this way, the accuracy of image super-samplings may be improved.

### BRIEF DESCRIPTION OF DRAWINGS

In order to more clearly illustrate the embodiments of the present disclosure, the following will briefly introduce the drawings that need to be used in the embodiments, and it will be obvious that the drawings in the following description are some of the embodiments of the present disclosure, and that other drawings can be obtained according to these drawings for a person with ordinary skill in the art without exerting creative laboriousness.
FIG. 1 is a schematic diagram of an application scenario provided by embodiments of the present disclosure;
FIG. 2 is a flow schematic diagram of an image processing method provided by embodiments of the present disclosure;
FIG. 3 is a schematic diagram of a second image provided by embodiments of the present disclosure;
FIG. 4 is a schematic diagram of an optical flow image corresponding to the second image provided by embodiments of the present disclosure;
FIG. 5 is a schematic diagram of a target optical flow image provided by embodiments of the present disclosure;
FIG. 6 is a process schematic diagram for determining a third stitched image provided by embodiments of the present disclosure;
FIG. 7 is a structural schematic diagram of a super-sampled network provided by embodiments of the present disclosure;
FIG. 8 is a process schematic diagram of an image processing method provided by embodiments of the present disclosure;
FIG. 9 is a schematic diagram of a training method for a super-sampled network provided by embodiments of the present disclosure;
FIG. 10 is a schematic diagram of a training process for a super-sampled network provided by embodiments of the present disclosure;
FIG. 11 is a structural schematic diagram of an image processing apparatus provided by embodiments of the present disclosure;
FIG. 12 is a structural schematic diagram of another image processing apparatus provided by embodiments of the present disclosure; and
FIG. 13 is a structural schematic diagram of an electronic device provided by embodiments of the present disclosure.

### DETAILED DESCRIPTION

Exemplary embodiments will be described herein in detail, examples of which are represented in the drawings. When the following description relates to the drawings, the same numerals in the different \ drawings indicate the same or similar elements unless otherwise indicated. The embodiments described in the following exemplary embodiments do not represent all embodiments consistent with the present disclosure. Rather, they are only examples of devices and methods consistent with some aspects of the present disclosure as detailed in the claims.

For ease of understanding, the concepts involved in embodiments of the present disclosure are described below.

For ease of understanding, the concepts involved in embodiments of the present disclosure are explained below.

Electronic device: it is a device with wireless receiving and sending functions. The electronic device may be deployed on land, including indoors or outdoors, handheld, wearable, or vehicle-mounted. The electronic device may be a mobile phone, a tablet computer (Pad), a computer with wireless receiving and sending functions, a virtual reality (VR) electronic device, an augmented reality (AR) electronic device, a wireless terminal in industrial control, a vehicle-mounted electronic device, a wireless terminal in self driving, a wireless electronic device in remote medical, a wireless electronic device in smart grid, a wireless electronic device in transportation safety, a wireless electronic device in smart city, a wireless electronic device in smart home, a wearable electronic device and the like. The electronic device involved in the embodiments of the present disclosure may also be referred to as a terminal, user equipment (UE), an access electronic device, a vehicle-mounted terminal, an industrial control terminal, a UE unit, a UE station, a mobile station, a mobile platform, a remote station, a remote electronic device, a mobile device, a UE electronic device, a wireless communication device, a UE agent, or a UE device or the like. The electronic device may also be fixed or mobile.

Optical flow reconstruction: the optical flow reconstruction is an image processing method that reconstructs an image based on optical flow information of the image. Herein, the optical flow information between any two images may indicate movement information of pixel positions between the two images. For example, for adjacent images A and B, the electronic device may acquire an optical flow image (image including the optical flow information) between the image A and the image B. Based on the optical flow image and the image A, the electronic device may reconstruct the image B, and based on the optical flow image and the image B, the electronic device may also reconstruct the image A. For example, the electronic device may acquire the optical flow image related to the image A and the image B. When each value in the optical flow image is +2, it means that each pixel of the image A is moved to the right by 2 pixel units, and the image B may be reconstructed.

It should be noted that the image B reconstructed may be the same or different from the original image B, and the image A reconstructed may be the same or different from the original image A, it is mainly based on the accuracy of the optical flow information included in the optical flow image.

In related technologies, super-sampling may convert low-resolution images in a video into high-resolution images, thereby a high-resolution video is obtained. However, before performing super-sampled convolution on the low-resolution images, the electronic device needs to extract features from the low-resolution images, to obtain low-resolution feature images, then up-sample the low-resolution feature images, to obtain high-resolution feature images, and finally perform the super-sampled convolution on the high-resolution feature images, to obtain the high-resolution images. In this way, it takes a longer time to perform the super-sampled convolution on high-resolution feature images, which may reduce the efficiency of super-sampling. Moreover, the electronic device may only perform super-sampling on the low-resolution images in a current frame, prior information of the low-resolution images obtained by the electronic device is less, and the difficulty of super-sampled is relatively large, thus the accuracy of image super-samplings is relatively low.

In order to solve the technical problem in the related technologies, embodiments of the present disclosure provide an image processing method. The electronic device may acquire a first image of a video and a first depth image corresponding to the first image; acquire N preceding frames of the first image as second images, and a second depth image corresponding to each second image and an optical flow image corresponding to each second image, wherein N is an integer greater than 0; and determine a super-sampled image corresponding to the first image based on the first image, the first depth image, the second images, N second depth images, and N optical flow images. In this way, the electronic device may perform super-sampled convolution on the low-resolution images, the time length required for image super-sampling is reduced, and the efficiency of super-sampling is improved. In addition, since the first stitched image and the N second stitched images may include the more prior information of the first image, the electronic device may accurately perform super-sampling on the first image, thereby the accuracy of image super-sampling is improved.

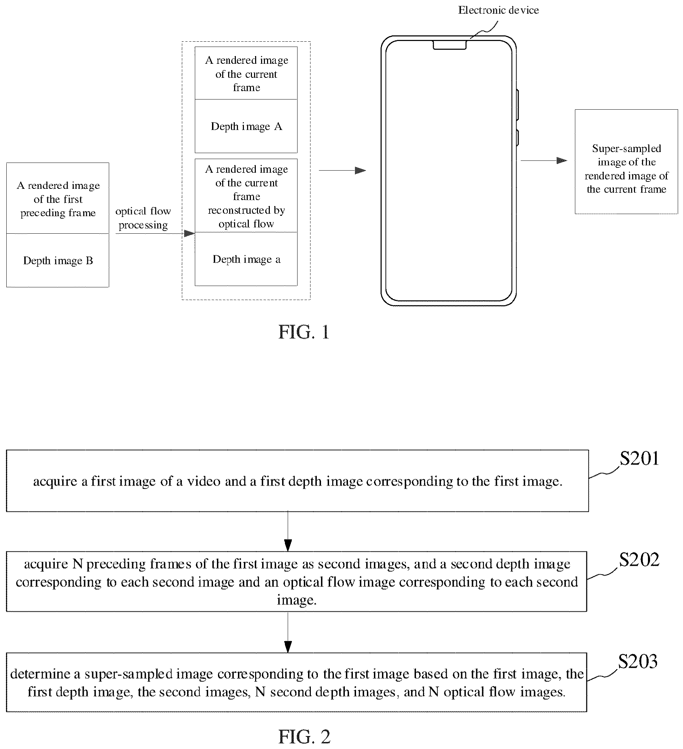

Application scenarios of the embodiments of the present disclosure are described below with reference to FIG. 1.

FIG. 1 is a schematic diagram of an application scenario provided by embodiments of the present disclosure. Please refer to Fig. 1, it includes: an electronic device, a rendered image of the first preceding frame, and a rendered image of the current frame. The rendered image of the first preceding frame and a depth image B corresponding to the rendered image of the first preceding frame are stitched, and optical flow processing is performed on an image after stitching, to obtain a stitched image of the rendered image of the current frame and a depth image a reconstructed by optical flow. Herein, the depth image a is the depth image of the current frame reconstructed by optical flow reconstruction based on the depth image B. The rendered image of the current frame and a depth image A corresponding to the rendered image of the current frame are stitched, to obtain a stitched image of the rendered image of the current image and the depth image A.

Please refer to FIG. 1, the stitched image of the rendered image of the current frame reconstructed by optical flow and the depth image a, and the stitched image of the rendered image of the current frame and the depth image A are input to the electronic device, and the electronic device may output a super sampled image of the rendered image of the current frame, herein the resolution of the super-sampled image of the rendered image of the current frame is greater than the resolution of the rendered image of the current frame. In this way, since the electronic device may perform super-sampling on the rendered image of the current frame based on the more image information, thereby the accuracy of super-sampling is improved. In addition, the electronic device may perform super-sample on low-resolution images, and pixels processed by the electronic device are less, thereby the efficiency of super-sampling is improved.

It should be noted that FIG. 1 only shows an application scenario of embodiments of the present disclosure in the form of an example, and does not limit the application scenario of the embodiments of the present disclosure.

Technical schemes of the present disclosure and how the technical schemes of the present disclosure solve the above technical problem are described in detail below with reference to specific embodiments. The following several specific embodiments may be combined with each other, and the same or similar concepts or processes may not be repeated in some embodiments. The embodiments of the present disclosure are described below in combination with drawings.

FIG. 2 is a flow schematic diagram of an image processing method provided by embodiments of the present disclosure. Please refer to FIG. 2, the method may include:
S201, acquire a first image of a video and a first depth image corresponding to the first image.

The executive subject of the embodiments of the present disclosure may be an electronic device or an image processing apparatus arranged in the electronic device. Herein, the image processing apparatus may be implemented based on software, and the image processing apparatus may also be implemented based on a combination of software and hardware, the embodiments of the present disclosure do not limit this.

Herein, the video may be a rendered video. For example, the video may be a virtual video, a virtual animation and the like rendered by a rendering machine, and the video may also be other videos, the embodiments of the present disclosure do not limit this. Optionally, the first image may be any frame of the video. For example, the first image may be the second frame of the video, the third frame of the video, or the fourth frame of the video or the like.

Optionally, the first depth image may be a depth image of the first image. Herein, the first depth image may indicate the distance between the pixels in the first image and a shooting device. For example, an object is included in the first image, when the distance between the object and the shooting device is smaller, then the color of the object is darker in the first depth image corresponding to the first image, and when the distance between the object and the shooting device is larger, then the color of the object is lighter in the first depth image corresponding to the first image. Based on the first depth image, the distance between each pixel in the first image and the shooting device may be determined.

Optionally, the electronic device may receive a video output from the rendering machine. For example, the rendering machine may render the virtual video, the electronic device may be connected to the rendering machine, and after the rendering machine generates the virtual video, the rendering machine may send the virtual video to the electronic device. Optionally, the electronic device may also receive a video sent by a server. For example, the electronic device may be connected to the server, and after the server collects the rendered video, the server may send the rendered video to the electronic device.

It should be noted that the electronic device may acquire the video based on other feasible implementation modes, and the embodiments of the present disclosure do not limit this.

Optionally, the electronic device may process the first image based on an image recognition algorithm, to obtain the first depth image corresponding to the first image. For example, the electronic device may process the first image by a pre-trained depth image acquisition model, and the depth image acquisition model may output the first depth image corresponding to the first image. For example, when rendering each frame of the image in the video, the rendering machine may render the depth image corresponding to each frame, and then send the depth image corresponding to each frame to the electronic device.

It should be noted that the electronic device may also acquire the depth image of the first image based on other feasible implementation modes (for example, after the server collects the video, it may extract the depth image corresponding to each frame in the video and send the first image and the first depth image to the electronic device), and the embodiments of the present disclosure do not limit this.

S202, acquire N preceding frames of the first image as second images, and a second depth image corresponding to each second image and an optical flow image corresponding to each second image.

Herein, the second images may be the N preceding frames of the first image in the video, where N is an integer greater than 0. Optionally, the electronic device may acquire the second images in the video based on the first image and the value of N. For example, when N is 1, the second images may be the first preceding frame of the first image; when N is 2, the second images may be the first preceding frame and the second preceding frame of the first image; when N is 3, the second images may be the first preceding frame, the second preceding frame, and the third preceding frame of the first image; and when N is 4, the second images may be the first preceding frame, the second preceding frame, the third preceding frame, and the fourth preceding frame of the first image.

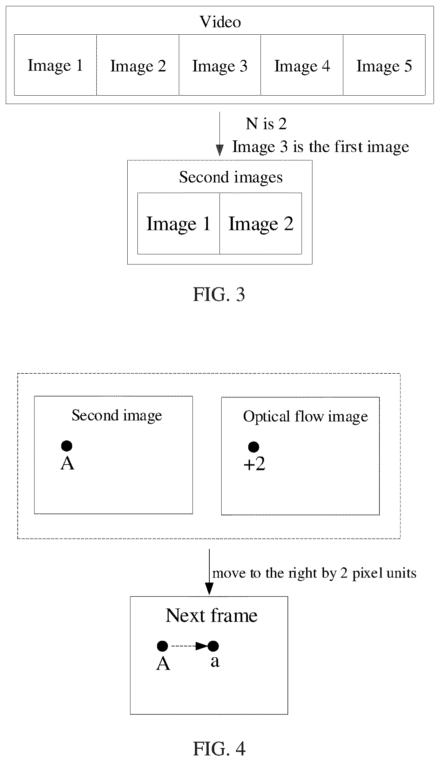

The second images are explained below with reference to FIG. 3.

FIG. 3 is a schematic diagram of a second image provided by embodiments of the present disclosure. Please refer to FIG. 3, it includes: a video. Herein, the video includes an image 1, an image 2, an image 3, an image 4, and an image 5. The 5 frames in the video are arranged in a playing order of the video. When N is 2 and the first image is the image 3, then the second images are two preceding frames of the image 3, herein the second images may include the image 1 and the image 2.

Herein, the second depth images may be the depth images corresponding to the second images. For example, when the number of the second images is 1, then the number of the second depth images is 1, and when the number of the second images is 2, then the number of the second depth images is 2. For example, when the electronic device acquires a second image A and a second image B, the electronic device may acquire a second depth image corresponding to the second image A and a second depth image corresponding to the second image B.

It should be noted that the method for acquiring the second depth images by the electronic device may refer to S201, and it is not repeatedly described in the embodiments of the present disclosure.

Herein, the optical flow image corresponding to the second image may indicate the pixel changes between the next frame of the second image and the second image. For example, when a second image includes 100 pixels, then the next frame of the second image also includes 100 pixels, and the optical flow image corresponding to the second image also includes 100 numerical values. For example, when each numerical value in the optical flow image corresponding to the second image is +2, it means that after each pixel in the second image is moved to the right by 2 pixel units, the next frame of the second image is obtained. For example, when the numerical value of a position 1 in the optical flow image corresponding to the second image is -2, it means that the pixel in the position 1 in the second image is moved to the left by 2 pixel units in the next frame of the second image; and when the numerical value of a position 2 in the optical flow image corresponding to the second image is +10, it means that the pixel in the position 2 in the second image is moved to the right by 10 pixel units in the next frame of the second image.

The optical flow image corresponding to the second image is explained below with reference to FIG. 4.

FIG. 4 is a schematic diagram of an optical flow image corresponding to the second image provided by embodiments of the present disclosure. Please refer to FIG. 4, it includes a second image and an optical flow image corresponding to the second image. The pixel of a point A in the second image is taken as an example, and the position of the point A corresponds to a numerical value is +2 in the optical flow image. Therefore, after processing the second image by the optical flow image, the pixel of the point A is moved to the right by 2 pixel units, to obtain the next frame of the second image. In the next frame of the second image, the pixel of the point A in the second image is moved to the position of the point a in the next frame.

Optionally, the number of the second images is the same as the number of the optical flow images. For example, when the electronic device acquires one second image, the electronic device may acquire an optical flow image corresponding to this second image, and by this optical flow image, the second image may be reconstructed by optical flow, to obtain the next frame of the second image. When the electronic device acquires two second images, the electronic device may acquire two optical flow images corresponding to the two second images. Based on the optical flow image corresponding to the first preceding frame when it is used as the second image, the first preceding frame is reconstructed by optical flow, to obtain an optical flow reconstructed image of the current frame; based on the optical flow image corresponding to the second preceding frame when it is used as the second image, the second preceding frame is reconstructed by optical flow, to obtain an optical flow reconstructed image of the first preceding frame, and based on the optical flow image of the first preceding frame, the optical flow reconstructed image of the first preceding frame is reconstructed by optical flow, to obtain the optical flow reconstructed image of the current frame.

Optionally, the electronic device may acquire the optical flow image corresponding to the second image based on an optical flow algorithm. For example, the electronic device may process the video based on the optical flow algorithm, to obtain an optical flow image (the optical flow image is used as the optical flow image corresponding to the first preceding frame) between every two frames of the images (it may also be any two frames, and the embodiments of the present disclosure do not limit this), the electronic device may store the optical flow image in a cache, and when the electronic device acquires the second image, the optical flow image corresponding to the second image may be determined in the cache.

It should be noted that the electronic device may also acquire the optical flow image corresponding to the second image based on other feasible implementation modes (for example, when rendering the video based on the rendering machine, the rendering machine may render the optical flow image between every two frames and store it in the cache. When the electronic device requests to acquire the optical flow image corresponding to the second image, the rendering machine may acquire the optical flow image in the cache and send the optical flow image to the electronic device). The embodiments of the present disclosure do not limit this.

S203, determine a super-sampled image corresponding to the first image based on the first image, the first depth image, the second images, N second depth images, and N optical flow images.

Herein, the super-sampled image is an image obtained by performing super-sampling on the first image. Optionally, the resolution of the super-sampled image is greater than the resolution of the first image. For example, when the first image includes 100 pixels, after performing super-sampling on the first image, the super-sampled image corresponding to the first image may include 200 pixels. In this way, the definition of the super-sampled image corresponding to the first image is greater than the definition of the first image.

Specifically, the electronic device may determine the super-sampled image corresponding to the first image based on the following feasible implementation modes: stitching the first image and the first depth image, to obtain a first stitched image; stitching each second image and the second depth image corresponding to the second image, to obtain N second stitched images; and determining the super-sampled image corresponding to the first image based on the first stitched image, the N second stitched images, and the N optical flow images.

Herein, the first stitched image may be an image obtained by stitching the first image and the first depth image. For example, the electronic device may stitch the first image up and down with the first depth image, to obtain the first stitched image, the electronic device may stitch the first image left and right with the first stitched image, to obtain the first depth image, and the electronic device may also stitch the first image and the first depth image based on other feasible implementation modes. The embodiments of the present disclosure do not limit this.

Herein, the second stitched image may be an image obtained by stitching the second image with the second depth image corresponding to the second image. For example, the electronic device acquires a second image A, a second image B, a second depth image 1, and a second depth image 2; when the second depth image 1 is the depth image of the second image A and the second depth image 2 is the depth image of the second image B, the electronic device may stitch the second image A and the second depth image 1, to obtain a second stitched image, and the electronic device may stitch the second image B and the second depth image 2, to obtain another second stitched image.

It should be noted that the electronic device may stitch the second image up and down with the second depth image, the electronic device may also stitch the second image left and right with the second depth image, and the electronic device may also stitch the second image with the second depth image based on other feasible implementation modes. The embodiments of the present disclosure do not limit this. In this way, the first stitched image and the second stitched image may fuse depth information of the image, as to improve the accuracy of image super-sampling.

The electronic device determines the super-sampled image corresponding to the first image based on the first stitched image, the N second stitched images, and the N optical flow images. Specifically, it may include: determining at least one target optical flow image associated with each second stitched image in the N optical flow images; and determining the super-sampled image based on the N second stitched images, the at least one target optical flow image associated with each second stitched image, and the first stitched image.

Herein, the target optical flow image is used to perform optical flow reconstruction on the second stitched image, so that the second image in the second stitched image is reconstructed as the first image, and the second depth image is reconstructed as the first depth image.

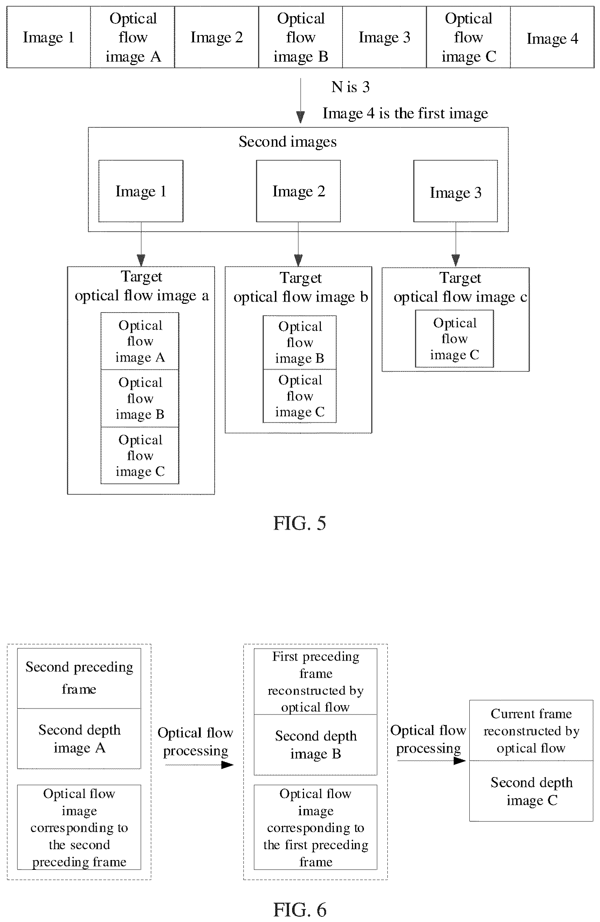

The target optical flow image is explained below with reference to FIG. 5.

FIG. 5 is a schematic diagram of a target optical flow image provided by embodiments of the present disclosure. Please refer to FIG. 5, it includes: an image 1, an image 2, an image 3 and an image 4, an optical flow image A between the image 1 and the image 2, an optical flow image B between the image 2 and the image 3, and an optical flow image C between the image 3 and the image 4. When N is 3 and the first image is image 4, then it is determined that the second image includes the image 1, the image 2, and the image 3.

Please refer to FIG. 5, the target optical flow image a corresponding to the second stitched image of the image 1 may include the optical flow image A, the optical flow image B, and the optical flow image C. The target optical flow image b corresponding to the second stitched image of the image 2 may include the optical flow image B and the optical flow image C. The target optical flow image c corresponding to the second stitched image of the image 3 may include the optical flow image C.

Optionally, the electronic device determines the super-sampled image based on the N second stitched images, the at least one target optical flow image associated with each second stitched image, and the first stitched image. Specifically, it includes: performing the optical flow reconstruction on the second stitched image based on the at least one target optical flow image associated with each second stitched image, to obtain N third stitched images; and determining the super-sampled image based on the N third stitched images and the first stitched image.

Herein, the third stitched image is an image obtained by performing optical flow reconstruction on the second stitched image based on the at least one target optical flow image. For example, when N is 1, the second image is the preceding frame of the first image (current frame), the electronic device performs optical flow reconstruction on the second stitched image corresponding to the preceding frame based on the second stitched image corresponding to the preceding frame and one optical flow image corresponding to the preceding frame, to obtain the third stitched image; and when N is 2, then the second image is the preceding first frame and the preceding second frame of the first image, herein the electronic device performs optical flow reconstruction on the second stitched image corresponding to the preceding first frame based on the second stitched image corresponding to the first preceding frame and the optical flow image corresponding to the first preceding frame, to obtain a third stitched image, and the electronic device performs optical flow reconstruction on the second stitched image corresponding to the second preceding frame based on the second stitched image corresponding to the second preceding frame, the optical flow image corresponding to the second preceding frame, and the optical flow image corresponding to the first preceding frame, to obtain another third stitched image.

The process for determining the third stitched image is explained below with reference to FIG. 6.

FIG. 6 is a process schematic diagram for determining a third stitched image provided by embodiments of the present disclosure. Please refer to FIG. 6, the electronic device (unshown in FIG. 6) may perform optical flow processing on the stitched image of the second preceding frame and the second depth image A corresponding to the second preceding frame based on the optical flow image corresponding to the second preceding frame, to obtain the stitched image between the first preceding frame and the second depth image B reconstructed by optical flow, herein the second depth image B is the depth image corresponding to the first preceding frame reconstructed by optical flow based on the second depth image A and the optical flow image corresponding to the second preceding frame.

Please refer to FIG. 6, the electronic device may perform optical flow processing on the stitched image between the first preceding frame and the second depth image B reconstructed by optical flow based on the optical flow image corresponding to the first preceding frame, to obtain the stitched image between the current frame and the second depth image C reconstructed by optical flow, herein the second depth image C is the depth image (third stitched image) corresponding to the current frame obtained by performing optical flow reconstruction based on the second depth image B and the optical flow image corresponding to the first preceding frame. In this way, since the third stitched image includes image information of the current frame of N preceding frames reconstructed by optical flow, the third stitched image may include more image prior information of the current frame, thereby the accuracy of super-sampling may be improved.

Optionally, the electronic device may determine the super-sampled image based on the following feasible implementation modes: inputting the N third stitched images and the first stitched image to a super-sampled network, to obtain the super-sampled image corresponding to the first image, where the super-sampled network is used to perform super-sampling on images. The last layer of the super-sampled network is a pixel recombination network, and the pixel recombination network is used to perform up-sampling on a feature image.

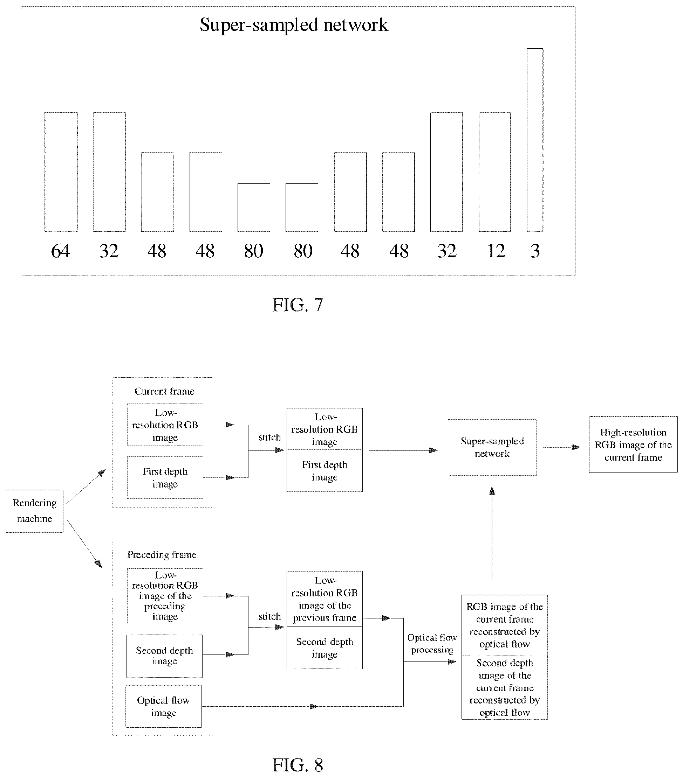

The structure of the super-sampled network is explained below with reference to FIG. 7.

FIG. 7 is a structural schematic diagram of a super-sampled network provided by embodiments of the present disclosure. Please refer to FIG. 7, it includes: a super-sampled network. Herein, the super-sampled network is a U-net structure consisting of 10 layers of convolution layers and 2 layers of up-sampling/down-sampling layers. For example, the number of channels in the first convolution layer is 64, and the number of channels in the second convolution layer is 32. Specifically, the up-sampling layer of output of the super-sampled network is a pixel recombination layer implemented on the basis of pixel shuffle, the input of the up-sampling layer is the first stitched image and third stitched image of low-resolution, and the output is the super-sampled image of high-resolution. In this way, the resolution of the feature image processed by the intermediate layer of the super-sampled network is relatively low, thus the processing time length of the super-sampled network may be reduced, and the efficiency of super-sampling is improved. In addition, since the super-sampled network may acquire more image information (such as the depth information, and the pixel information), the accuracy of super-sampling may be improved.

It should be noted that the super-sampled network may also be other lightweight encoder-decoder networks with similar structures, it only needs to remove a batch normalization layer from the lightweight encoder-decoder network and replace the output layer with a pixel shuffle layer.

Embodiments of the present disclosure provide an image processing method. The electronic device may acquire a first image of a video and a first depth image corresponding to the first image; acquire N preceding frames of the first image as second images, and a second depth image corresponding to each second image and an optical flow image corresponding to each second image, wherein N is an integer greater than 0; and determine a super-sampled image corresponding to the first image based on the first image, the first depth image, the second images, N second depth images, and N optical flow images. In this way, the super-sampled network of the electronic device can directly process low-resolution images, and the resolution of the feature images processed by the intermediate layer of the super-sampled network is relatively low, thereby the efficiency of super-sampling is improved. Moreover, since the first stitched image and the N second stitched images may include the more depth information and pixel information of the first image, the electronic device may accurately perform super-sampling on the first image, thereby the accuracy of the image super-sampling is improved.

Based on the embodiments shown in FIG. 2, the process of the above image processing method is explained below with reference to FIG. 8.

FIG. 8 is a process schematic diagram of an image processing method provided by embodiments of the present disclosure. Please refer to FIG. 8, it includes a rendering machine. Herein, the rendering machine may render a low-resolution red-green-blue RGB image (the size is H×W×3) of the current frame and a first depth image corresponding to the low-resolution RGB image of the current frame. The rendering machine may render a low-resolution RGB image (the size is H×W×3) of the preceding frame, and a second depth image and an optical flow image (the size is H×W×2) corresponding to the low-resolution RGB image of the preceding frame. Herein, the optical flow image indicates the displacement of corresponding pixels between the current frame and the preceding frame, the first channel represents the direction and size of the image's offset in an x direction, and the second channel represents the direction and size of the image's offset in a y direction.

Please refer to FIG. 8, the low-resolution RGB image of the current frame and the first depth image are stitched, to obtain a first stitched image, and the first stitched image includes the low-resolution RGB image of the current frame the and the first depth image. The low-resolution RGB image of the preceding frame and the second depth image are stitched, to obtain a second stitched image, and the second stitched image includes the low-resolution RGB image of the preceding frame and the second depth image.

Please refer to FIG. 8, optical flow processing is performed on the second stitched image based on the optical flow image, to obtain a third stitched image. Herein, the third stitched image includes the RGB image of the current frame reconstructed by optical flow and the second depth image of the current frame reconstructed by optical flow. The first stitched image and the second stitched image are input to the super-sampled network, and the super-sampled network may output the high-resolution RGB image (the size is 2H×2W×3) of the current frame. In this way, the resolution of the feature images processed by the intermediate layer of the super-sampled network is relatively low, thereby the efficiency of super-sampling is improved. Moreover, since the first stitched image and the third stitched image may include the more depth information and pixel information of the first image, the electronic device may accurately perform super-sampling on the first image, thereby the accuracy of the image super-sampling is improved.

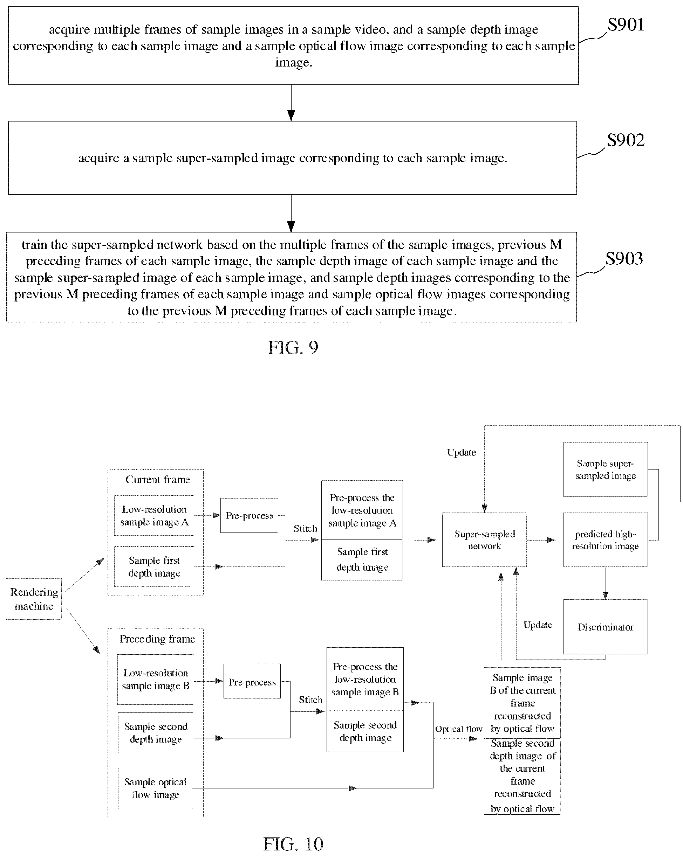

On the basis of any one of the above embodiments, the above image processing method further includes a training method for a super-sampled network, and the training method for the super-sampled network is explained below with reference to FIG. 9.

FIG. 9 is a schematic diagram of a training method for a super-sampled network provided by embodiments of the present disclosure. Please refer to FIG. 9, the method flow includes:

S901, acquire multiple frames of sample images in a sample video, and a sample depth image corresponding to each sample image and a sample optical flow image corresponding to each sample image.

Optionally, the sample video may be a rendered video. For example, the sample video may be a game animation video, a virtual character video and the like. The electronic device may receive the sample video sent by other devices. For example, the electronic device may be connected to the rendering machine, and after rendering to obtain the sample video, the rendering machine may send the sample video to the electronic device.

It should be noted that in the training phase, the electronic device may acquire each frame of a sample image in the sample video, and a sample depth image and a sample optical flow image corresponding to each frame of the sample image. The acquisition modes for the sample image and the sample depth image and the sample optical flow image corresponding to the sample image may refer to the embodiments shown in FIG. 2, and it is not repeatedly described here in the embodiments of the present disclosure.

S902, acquire a sample super-sampled image corresponding to each sample image.

Herein, the sample super-sampled image is a super-sampled image corresponding to the sample image. The resolution of the sample image is lower than the resolution of the sample super-sampled image corresponding to the sample image. For example, the electronic device may acquire two images with the same image content, one of which has a lower resolution and the other has a higher resolution. Therefore, the low-resolution image may be used as the sample image, and the high-resolution image may be used as the sample super-sampled image corresponding to the sample image. For example, in the process of practical applications, each frame of a standard definition sample video may be used as the sample image, and each frame of a super definition sample video corresponding to the standard definition sample video may be used as the sample super-sampled image.

It should be noted that the electronic device may also acquire the sample super-sampled image corresponding to each frame of the sample image based on other feasible implementation modes, and the embodiments of the present disclosure do not limit this.

S903, train the super-sampled network based on the multiple frames of the sample images, M preceding frames of each sample image, the sample depth image of each sample image and the sample super-sampled image of each sample image, and sample depth images corresponding to the M preceding frames of each sample image and sample optical flow images corresponding to the M preceding frames of each sample image.

Herein, M is an integer greater than or equal to N. Specifically, for the sample image of the current frame, the electronic device may train the super-sampled network based on the following feasible implementation modes: the sample image and the sample depth image of the sample image are stitched, to obtain a sample first stitched image, the M preceding frames of the sample image and the sample depth image corresponding to the M preceding frames of the sample image are stitched, to obtain M frames of sample second stitched images, based on M frames of sample optical flow images corresponding to the M preceding frames of the sample image, optical flow processing is performed on the M frames of the sample second stitched images, to obtain M frames of sample third stitched images, and based on the sample first stitched image, the M frames of the sample third stitched images, and the sample super-sampled image corresponding to the sample image, the super-sampled network is trained.

Herein, the sample second stitched image includes the one frame of the M preceding frames of the sample image and the sample depth image corresponding to the one frame of the M preceding frames of the sample image. It should be noted that the methods for stitching the sample image and the sample depth image of the sample image, and stitching the M preceding frames of the sample image and the sample depth image corresponding to the M preceding frames of the sample image may refer to the embodiments shown in FIG. 2, it is not repeatedly described here in the embodiments of the present disclosure.

Herein, the sample third stitched image is an image obtained by performing optical flow reconstruction on the sample second stitched image. It should be noted that the method for acquiring the sample third stitched image by the electronic device may refer to the embodiments shown in FIG, 2, and it is not repeatedly described here in the embodiments of the present disclosure.

Optionally, the electronic device trains the super-sampled network based on the sample first stitched image, M frames of the sample third stitched images, and the sample super-sampled image corresponding to the sample image. Specifically, it includes: processing the sample first stitched image and M frames of the sample third stitched images based on the super-sampled network, to obtain a predicted super-sampled image, and based on the loss between the predicted super-sampled image and the sample super-sampled image, the super-sampled network is trained. For example, the electronic device may construct a loss function based on the predicted super-sampled image predicted by the super-sampled network and the real sample super-sampled image, and then network parameters in the super-sampled network are updated by the loss function.

Optionally, the electronic device may also assist in the training of the super-sampled network based on a discriminator. For example, the discriminator may be composed of 4 layers of the convolution layers, and the discriminator may judge the authenticity of the predicted super-sampled image output by the super-sampled network, and then the super-sampled network is trained by a judgment result. For example, in the process of practical applications, the true-false discriminator may determine whether the image output by the super-sampled network is a predicted image, and in the process of training, it makes the image output by the super-sampled network close to a real image (namely, the discriminator may not determine whether the image output by the super-sampled network is the predicted image or the real image).

Optionally, after the electronic device acquires the multiple frames of the sample images in the sample video, the electronic device may also pre-process the multiple frames of the sample images. Herein, the pre-processing may include at least one selected from a group consisting of: blur processing, noise processing, compression distortion processing, and ring effect distortion processing.

Herein, the blur processing may include Gaussian blur processing and motion blur processing; the noise processing may include Gaussian noise processing, Poisson noise processing, colored noise processing, and gray noise processing; the compression distortion processing may be Joint Photographic Experts Group (JPEG) compression processing; and the ring effect distortion processing may be one or more of ring effect distortions (sinc filter). In this way, by processing the sample image in the above pre-processing modes, the original low definition image may be simulated, thereby the robustness of the super-sampled network may be increased.

It should be noted that in the training phase, Enhanced Subpixel Morphological Antialiasing (SMAA) processing may be applied to the sample super-sampled image acquired by the electronic device. In this way, the antialiasing effect of the super-sampled network may be enhanced.

It should be noted that in the process of practical applications, the electronic device may randomly pre-process the multiple frames of the sample images. For example, after the electronic device acquires the multiple frames of the sample images, the electronic device may pre-process 30% of the sample images, and the remaining 70% of the sample images are not pre-processed. In addition, when the sample images are pre-processed, the pre-processing mode for each sample image may be randomly selected (for example, one or more of the above pre-processing modes are randomly selected, to process the sample images), and the electronic device may also pre-process the sample images based on other modes. The embodiments of the present disclosure do not limit this.

The training process of the super-sampled network is explained below with reference to FIG. 10.

FIG. 10 is a schematic diagram of a training process for a super-sampled network provided by embodiments of the present disclosure. Please refer to FIG. 10, it includes a rendering machine. Herein, the rendering machine may render a low-resolution sample image A of the current frame and a sample first depth image corresponding to the sample image A. The rendering machine may render a low-resolution sample image B of the preceding frame, and a sample second depth image and a sample optical flow image corresponding to the sample image B.

Please refer to FIG. 10, the sample image A is pre-processed, and the pre-processed sample image A and the first depth image are stitched, to obtain a first stitched image, the first stitched image includes the pre-processed low-resolution sample image A and the sample first depth image. The sample image B is pre-processed, and the pre-processed sample image B and the sample second depth image are stitched, to obtain a second stitched image, the second stitched image includes the pre-processed low-resolution sample image B and the sample second depth image.

Please refer to FIG. 10, optical flow processing is performed on the second stitched image based on the optical flow image, to obtain a third stitched image. Herein, the third stitched image includes the sample image B of the current frame reconstructed by optical flow and the sample second depth image of the current frame reconstructed by optical flow. The first stitched image and the second stitched image are input to the super-sampled network, and the super-sampled network may output a predicted high-resolution image.

Please refer to FIG. 10, the electronic device (unshown in FIG. 10) may update the parameters in the super-sampled network based on the loss between the predicted high-resolution image and the sample super-sampled image corresponding to the low-resolution sample image A. The electronic device may process the predicted high-resolution image based on the discriminator and update the parameters in the super-sampled network based on the output result of the discriminator.

Embodiments of the present disclosure provide a training method for a super-sampled network. Multiple frames of sample images in a sample video, and a sample depth image and a sample optical flow image corresponding to each frame of the sample image are acquired, a sample super-sampled image corresponding to each sample image is acquired, and based on the multiple frames of the sample images, M preceding frames of each sample image, the sample depth image of each sample image and the sample super-sampled image of each sample image, and sample depth images corresponding to the M preceding frames of each sample image and sample optical flow images corresponding to the M preceding frames of each sample image, the super-sampled network is trained. In this way, since the super-sampled network may directly process the low-resolution image, the resolution of the feature image processed by the intermediate layer of the super-sampled network is relatively low, thereby the training efficiency of the super-sampled network is improved. Moreover, since pre-processing the sample image may simulate the original low-definition image, the robustness of the super-sampled network may be increased.

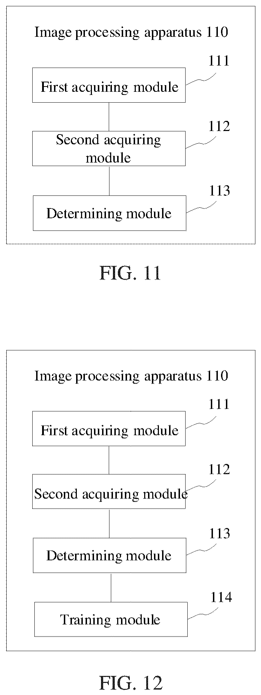

FIG. 11 is a structural schematic diagram of an image processing apparatus provided by embodiments of the present disclosure. Please refer to FIG. 11, the image processing apparatus 110 includes a first acquiring module 111, a second acquiring module 112, and a determining module 113, wherein:
the first acquiring module 111 is configured to acquire a first image of a video and a first depth image corresponding to the first image;
the second acquiring module 112 is configured to acquire N preceding frames of the first image as second images, and a second depth image corresponding to each second image and an optical flow image corresponding to each second image, wherein N is an integer greater than 0; and
the determining module 113 is configured to determine a super-sampled image corresponding to the first image based on the first image, the first depth image, the second images, N second depth images, and N optical flow images.

According to one or more embodiments of the present disclosure, the determining module 113 is specifically configured to:
stitch the first image and the first depth image, to obtain a first stitched image;
stitch each second image and the second depth image corresponding to the second image, to obtain N second stitched images; and
determine the super-sampled image corresponding to the first image based on the first stitched image, the N second stitched images, and the N optical flow images.

According to one or more embodiments of the present disclosure, the determining module 113 is specifically configured to:
determine at least one target optical flow image associated with each second stitched image in the N optical flow images, wherein the target optical flow image is used to perform optical flow reconstruction on the second stitched image, so that the second image in the second stitched image is reconstructed as the first image, and the second depth image is reconstructed as the first depth image; and
determine the super-sampled image based on the N second stitched images, the at least one target optical flow image associated with each second stitched image, and the first stitched image.

According to one or more embodiments of the present disclosure, the determining module 113 is specifically configured to:
perform the optical flow reconstruction on the second stitched image based on the at least one target optical flow image associated with each second stitched image, to obtain N third stitched images; and
determine the super-sampled image based on the N third stitched images and the first stitched image.

According to one or more embodiments of the present disclosure, the determining module 113 is specifically configured to:
input the N third stitched images and the first stitched image to a super-sampled network, to obtain the super-sampled image corresponding to the first image,
wherein the super-sampled network is used to perform super-sampling on images.

According to one or more embodiments of the present disclosure, a last layer of the super-sampled network is a pixel recombination network, and the pixel recombination network is used to perform up-sampling on a feature image.

The image processing apparatus provided by the embodiments of the present disclosure can be used to carry out the technical solutions of the method embodiments described above, which are similar in terms of realization principles and technical effects, and which will not be repeated herein in the present embodiments.

FIG. 12 is a structural schematic diagram of another image processing apparatus provided by embodiments of the present disclosure. Based on the embodiments shown in FIG. 11, refer to FIG. 12, the image processing apparatus 110 further includes a training module 114, the training module 114 is configured to:
acquire multiple frames of sample images in a sample video, and a sample depth image corresponding to each sample image and a sample optical flow image corresponding to each sample image;
acquire a sample super-sampled image corresponding to each sample image; and
train the super-sampled network based on the multiple frames of the sample images, M preceding frames of each sample image, the sample depth image of each sample image and the sample super-sampled image of each sample image, and sample depth images corresponding to the M preceding frames of each sample image and sample optical flow images corresponding to the M preceding frames of each sample image, wherein M is an integer greater than or equal to N.

According to one or more embodiments of the present disclosure, the training module 114 is further configured to:
pre-process the multiple frames of the sample images,
wherein the pre-process comprises at least one selected from a group consisting of: blur processing, noise processing, compression distortion processing, and ring effect distortion processing.

The image processing apparatus provided by the embodiments of the present disclosure can be used to carry out the technical solutions of the method embodiments described above, which are similar in terms of realization principles and technical effects, and which will not be repeated herein in the present embodiments.

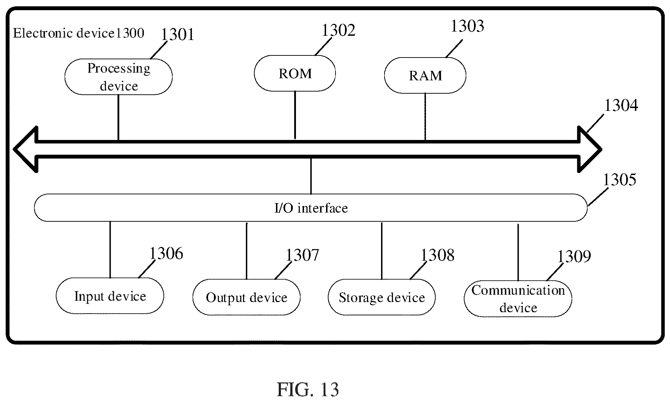

FIG. 13 is a structural schematic diagram of an electronic device provided by embodiments of the present disclosure.

Referring to FIG. 13, FIG. 13 illustrates a schematic structural diagram of an electronic device 1300 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in FIG. 13 is merely an example, and should not pose any limitation to the functions and the range of use of the embodiments of the present disclosure.

As illustrated in FIG. 5, the electronic device 1300 may include a processing apparatus 1301 (e.g., a central processing unit, a graphics processing unit, etc.), which can perform various suitable actions and processing according to a program stored in a read-only memory (ROM) 1302 or a program loaded from a storage apparatus 1308 into a random-access memory (RAM) 1303. The RAM 1303 further stores various programs and data required for operations of the electronic device 1300. The processing apparatus 1301, the ROM 1302, and the RAM 1303 are interconnected by means of a bus 504. An input/output (I/O) interface 1305 is also connected to the bus 1304.

Usually, the following apparatus may be connected to the I/O interface 1305: an input apparatus 1306 including, for example, a touch screen, a touch pad, a keyboard, a mouse, a camera, a microphone, an accelerometer, a gyroscope, or the like; an output apparatus 1307 including, for example, a liquid crystal display (LCD), a loudspeaker, a vibrator, or the like; a storage apparatus 1308 including, for example, a magnetic tape, a hard disk, or the like; and a communication apparatus 1309. The communication apparatus 1309 may allow the electronic device 1300 to be in wireless or wired communication with other devices to exchange data. While FIG. 13 illustrates the electronic device 1300 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 1309 and installed, or may be installed from the storage apparatus 1308, or may be installed from the ROM 1302. When the computer program is executed by the processing apparatus 1301, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

The above-described computer-readable medium may be contained in the above-described electronic device; or it may be present separately and not assembled into the electronic device.

The computer-readable medium carries one or more programs that, when the one or more programs are executed by the electronic device, cause the electronic device to implement the method shown in the above embodiments.

Embodiments of the present disclosure provide a computer-readable storage medium, the computer-readable storage medium having computer-executable instructions stored therein, which, when the processor executes the computer-executable instructions, implements the image processing method shown in the above embodiments.

Embodiments of the present disclosure provide a computer program product including a computer program, the computer program when executed by a processor implementing the image processing method as shown in the above embodiments.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances, for example, the first acquiring unit may also be described as a "unit for acquiring at least two Internet Protocol addresses".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

It should be noted that modifications of "one" and "a plurality of" mentioned in the present disclosure are illustrative rather than restrictive. Those skilled in the art should understand that unless otherwise clearly indicated in the context, they should be understood as "one or more".

The names of messages or information exchanged between a plurality of apparatuses in the implementations of the present disclosure are only for illustrative purposes, and are not intended to limit the scope of the messages or information.

It should be understood that before using the technical solutions disclosed in the embodiments of the present disclosure, the user should be informed of the type of personal information involved in the present disclosure, the scope of use, the usage scenario, and the like through an appropriate manner in accordance with relevant laws and regulations, and the user's authorization should be obtained.

For example, when the receiving of the active request from the user is responded to, prompt information is sent to the user, so as to explicitly prompt the user that the operation requested to be performed by the user will require the acquisition and use of the user's personal information. Thus, the user can independently choose whether to provide the personal information to the software or hardware such as the electronic device, the application, the server, or the storage medium that performs the operation of the technical solution of the present disclosure, according to the prompt information.

As an optional but non-limiting implementation, for example, the manner of sending the prompt information to the user in response to the receiving of the active request from the user may be a manner of a pop-up window, and the prompt information may be presented in text in the pop-up window. In addition, the pop-up window may also include a selection control for the user to select "agree" or "disagree" to provide the personal information to the electronic device. It can be understood that the above process of notifying and acquiring the user's authorization is only illustrative, and does not constitute a limitation on the implementations of the present disclosure. Other manners that meet the requirements of relevant laws and regulations may also be applied to the implementations of the present disclosure.

It can be understood that the data involved in the technical solution (including but not limited to the data itself, the acquisition or use of the data) should comply with the requirements of corresponding laws and regulations and related provisions. The data may include information, parameters, and messages, such as cut flow indication messages.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims. Specific manners of operations performed by the modules in the apparatus in the above embodiment have been described in detail in the embodiments regarding the method, which will not be explained and described in detail herein again.

## Claims

1. An image processing method, comprising:
acquiring a first image of a video and a first depth image corresponding to the first image;
acquiring N preceding frames of the first image as second images, and a second depth image corresponding to each second image and an optical flow image corresponding to each second image, wherein N is an integer greater than 0; and
determining a super-sampled image corresponding to the first image based on the first image, the first depth image, the second images, N second depth images, and N optical flow images.

2. The method according to claim 1, wherein the determining a super-sampled image corresponding to the first image based on the first image, the first depth image, the N frames of second images, N second depth images, and N optical flow images, comprises:
stitching the first image and the first depth image, to obtain a first stitched image;
stitching each second image and the second depth image corresponding to the second image, to obtain N second stitched images; and
determining the super-sampled image corresponding to the first image based on the first stitched image, the N second stitched images, and the N optical flow images.

3. The method according to claim 2, wherein the determining the super-sampled image corresponding to the first image based on the first stitched image, the N second stitched images, and the N optical flow images, comprises:
determining at least one target optical flow image associated with each second stitched image in the N optical flow images, wherein the target optical flow image is used to perform optical flow reconstruction on the second stitched image, so that the second image in the second stitched image is reconstructed as the first image, and the second depth image is reconstructed as the first depth image; and
determining the super-sampled image based on the N second stitched images, the at least one target optical flow image associated with each second stitched image, and the first stitched image.

4. The method according to claim 3, wherein the determining the super-sampled image based on the N second stitched images, the at least one target optical flow image associated with each second stitched image, and the first stitched image, comprises:
performing the optical flow reconstruction on the second stitched image based on the at least one target optical flow image associated with each second stitched image, to obtain N third stitched images; and
determining the super-sampled image based on the N third stitched images and the first stitched image.

5. The method according to claim 4, wherein the determining the super-sampled image based on the N third stitched images and the first stitched image, comprises:
inputting the N third stitched images and the first stitched image to a super-sampled network, to obtain the super-sampled image corresponding to the first image,
wherein the super-sampled network is used to perform super-sampling on images.

6. The method according to claim 5, wherein a last layer of the super-sampled network is a pixel recombination network, and the pixel recombination network is used to perform up-sampling on a feature image.

7. The method according to claim 5 or 6, wherein the super-sampled network is obtained by training based on following modes:
acquiring multiple frames of sample images in a sample video, and a sample depth image corresponding to each sample image and a sample optical flow image corresponding to each sample image;
acquiring a sample super-sampled image corresponding to each sample image; and
training the super-sampled network based on the multiple frames of the sample images, M preceding frames of each sample image, the sample depth image of each sample image and the sample super-sampled image of each sample image, and sample depth images corresponding to the M preceding frames of each sample image and sample optical flow images corresponding to the M preceding frames of each sample image, wherein M is an integer greater than or equal to N.

8. The method according to claim 7, wherein after acquiring multiple frames of the sample images in the sample video, the method further comprises:
pre-processing the multiple frames of the sample images,
wherein the pre-processing comprises at least one selected from a group consisting of: blur processing, noise processing, compression distortion processing, and ring effect distortion processing.

9. An image processing apparatus, comprising a first acquiring module, a second acquiring module, and a determining module, wherein,
the first acquiring module is configured to acquire a first image of a video and a first depth image corresponding to the first image;
the second acquiring module is configured to acquire N preceding frames of the first image as second images, and a second depth image corresponding to each second image and an optical flow image corresponding to each second image, wherein N is an integer greater than 0; and
the determining module is configured to determine a super-sampled image corresponding to the first image based on the first image, the first depth image, the second images, N second depth images, and N optical flow images.

10. An electronic device, comprising a processor and a memory, wherein,
the memory stores a computer execution instructions; and
the processor executes the computer execution instructions stored in the memory, so that the processor executes the image processing method according to any one of claims 1-8.

11. A computer-readable storage medium, wherein the computer-readable storage medium stores a computer execution instruction, and when the processor executes the computer execution instruction, the image processing method according to any one of claims 1-8 is implemented.
